# EUROPÄISCHE PATENTSCHRIFT

(11) **EP 4 020 018 B1**
(45) Veröffentlichungstag und Bekanntmachung des Hinweises auf die Patenterteilung: **19.02.2025**
(21) Anmeldenummer: 20216342.4
(22) Anmeldetag: 22.12.2020
(51) Int. Cl.: G01T 1/10, G01T 1/178, G01T 1/205

(54) **DOSIMETER**
DOSIMETER
DOSIMÈTRE

(43) Veröffentlichungstag der Anmeldung: 29.06.2022
(73) Patentinhaber: Deutsches Elektronen-Synchrotron DESY, 22607 Hamburg (DE)
(72) Erfinder: Dr. Leuschner, Albrecht, 25469 Halstenbek (DE)
(74) Vertreter: Bird & Bird LLP - Hamburg

(56) Entgegenhaltungen:
- EP-A1- 0 754 305
- EP-A1- 1 078 282
- EP-A1- 3 173 823
- EP-A1- 3 489 722
- EP-A1- 3 508 886
- DE-A1- 102012 108 174
- US-A1- 2009 014 665
- LEGALL HERBERT ET AL: "X-ray radiation protection aspects during ultrashort laser processing", JOURNAL OF LASER APPLICATIONS, LASER INSTITUTE OF AMERICA, US, vol. 32, no. 2, 5 March 2020 (2020-03-05), XP012245139, ISSN: 1042-346X, [retrieved on 20200305], DOI: 10.2351/1.5134778

## Beschreibung

Die vorliegende Erfindung betrifft ein Dosimeter zur Messung einer Strahlungsdosis von ionisierender Strahlung, eine Verwendung eines solchen Dosimeters zur Messung einer Strahlungsdosis einer ionisierenden Strahlung sowie ein Spektrometer zur Bestimmung einer energieabhängigen Strahlungsdosis für ionisierende Strahlung mit einem Ausgangsenergiespektrum mit einer Mehrzahl von solchen Dosimetern.

Zur Messung von Strahlungsdosen von ionisierender Strahlung, wie beispielsweise Photonen oder Elektronen, sind verschiedenste Arten von Dosimetern bekannt. Beispielsweise werden für die Erfassung von Strahlungsdosen über längere Zeiträume Filmdosimeter oder Thermolumineszenzdosimeter (TLD) verwendet. Zur Messung der momentanen Strahlungsdosis werden beispielsweise Ionisationskammern verwendet. Eine Ionisationskammer ist eine mit einem Zählgas gefüllte Messkammer, in der Elektroden angeordnet sind, zwischen denen eine Hochspannung anliegt. Tritt ionisierende Strahlung in die Kammer ein, wird das Zählgas ionisiert. Die dabei entstehenden Ladungsträger werden an den Elektroden gesammelt und es kann ein elektrischer Strom gemessen werden, der proportional zur Dosisleistung der Strahlung ist.

Bekannte Dosimeter kommen jedoch an ihre Grenzen, wenn es um die Messung von Strahlungsdosen geht, die in sehr kurzen Zeiträumen entstehen. Beispielsweise ist es bisher technisch äußerst aufwendig, die momentane Strahlungsdosis von ionisierender Strahlung zu messen, die beim Auftreffen eines Strahls eines Ultrakurzpulslaser auf einem Werkstück entsteht, da die Sättigungsgrenzen und das sogenannte "Pile-up" die Messung erschweren bzw. zu Fehlinterpretationen führen. Ähnlich schwierig ist die Messung der Dosis von Strahlung, die bei einer laserinduzierten Beschleunigung von Teilchen entsteht, wie beispielsweise bei der Laserplasmabeschleunigung.

Unter einem Ultrakurzpulslaser wird vorliegend ein Laser mit einer Pulsdauer im Bereich von Pikosekunden, Femtosekunden oder kürzer verstanden. Die Strahlungspulse, die bei der Verwendung solcher Laser entstehen, sind von ähnlicher Dauer. Bekannte Dosimeter zur Messung von zeitlich veränderlichen Strahlungsdosen bzw. aktuellen Strahlungsdosen, wie beispielsweise Ionisationskammern, können die Dosis derart kurzer Strahlungspulse nicht oder nur ungenau messen, da ihre zeitliche Auflösung zu gering ist. Beispielsweise dauert bei einem Dosimeter bereits die Sammlung der Ladungsträger an den Elektroden ca. 1 µs, also ein Vielfaches der Dauer eines von einem Ultrakurzpulslaser erzeugen Strahlungspulses. Zudem ist aufgrund der kurzen Dauer des Strahlungspulses selbst bei verhältnismäßig geringen Strahlungsdosen die Dosisleistung sehr hoch, so dass Sättigungseffekte bereits bei kleinen Dosen eine sehr große Rolle spielen.

Aus der EP 3 173 823 A1 sind eine Alphastrahlen-Überwachungsvorrichtung und ein Alphastrahlen-Überwachungsverfahren bekannt, die speziell zur Messung von Alphastrahlung vorgesehen sind und ein von Alphastrahlen abgeleitetes Signal auswerten können.

Aus der EP 3 489 722 A1 ist ein Strahlungsmonitor zum Messen einer Dosisrate bekannt, der einen fluoreszierenden Festkörper aufweist.

Aus der EP 0 754 305 A1 sind ein Gerät und ein Verfahren zur Messung der spezifischen Aktivität von Tritium durch Gas-Szintillation bekannt.

Aus LEGALL HERBERT ET AL: "X-ray radiation protection aspects during ultrashort laser processing", JOURNAL OF LASER APPLICATIONS, LASER INSTITUTE OF AMERICA, US, Bd. 32, Nr, 2, 5, sind Aspekte des Röntgenstrahlenschutzes bei der Ultrakurzzeit-Laserbearbeitung bekannt.

Vor diesen Hintergrund stellt sich dem Fachmann die Aufgabe, ein aktives, d.h., kein integrierendes, Dosimeter für die Messung von Strahlungsdosen von gepulster ionisierter Strahlung bereitzustellen sowie ein Verfahren zur Verwendung eines solchen Dosimeters und ein Spektrometer zur Bestimmung einer energieabhängigen Strahlungsdosis anzugeben.

Die der Erfindung zugrundeliegende Aufgabe wird durch ein Dosimeter gemäß Anspruch 1, ein Verfahren zur Verwendung eines Dosimeters nach Anspruch 11 sowie ein Spektrometer nach Anspruch 12 gelöst. Bevorzugte Ausgestaltungen der verschiedenen Aspekte der Erfindung sind Gegenstand der jeweiligen abhängigen Ansprüche.

Gemäß einem ersten Aspekt wird das der Erfindung zugrundeliegende Problem durch ein Dosimeter zur Messung einer Strahlungsdosis von ionisierender Strahlung mit einer Messkammer und einem Lichtsensor gelöst. Die Messkammer ist mit einem Fluorophor gefüllt und lichtdicht, so dass kein Licht aus der Umgebung in die Messkammer einfallen kann. Der Lichtsensor weist eine Ansprechzeit von weniger als 10 ns auf und ist dazu konfiguriert, von ionisierender Strahlung in dem Fluorophor in der Messkammer erzeugtes Fluoreszenzlicht zu erfassen und ein Signal zu erzeugen, das proportional zur Fluenz des erfassten Fluoreszenzlichts ist.

Mit anderen Worten weist ein erfindungsgemäßes Dosimeter eine Messkammer auf, in der ein Lichtsensor mit einer vorzugsweise sehr kurzen Ansprechzeit angeordnet ist. Die Messkammer ist mit einem Medium gefüllt, in dem durch ionisierende Strahlung Fluoreszenz angeregt werden kann. Solche Medien werden vorliegend als Fluorophor bezeichnet. Vorzugsweise handelt es sich bei dem Fluorophor um ein Gas. Es ist aber auch denkbar, eine Flüssigkeit oder taube Gläser, d.h., einen lichtdurchlässigen Festkörper, als Fluorophor zu verwenden. Die Messkammer ist lichtdicht, also so ausgestaltet, dass kein Umgebungslicht in die Messkammer und auf den Lichtsensor fällt. Damit wird verhindert, dass Umgebungslicht die Messung der Dosis verfälscht. Hierzu wird die Messkammer regelmäßig aus einem lichtabsorbierenden Material gebildet bzw. mit einem solchen ummantelt.

Die Strahlung hat vorzugsweise eine gepulste Zeitstruktur mit einer Pulsdauer von weniger als einer Nanosekunde. Durch diese kurze Zeitdauer tritt die gesamte, in einem Strahlungspuls mit dem Gas in der Messkammer wechselwirkende Strahlung in sehr kurzer Zeit durch die Messkammer.

Zur Messung einer Strahlungsdosis wird die Kammer in einem Bereich angeordnet, in dem die Dosis einer ionisierenden Strahlung gemessen werden soll. Beispielsweise kann die Messkammer in der Nähe eines Gegenstandes angeordnet werden, der mit einem Ultrakurzpulslaser mit einer Pulslänge im Bereich von wenigen Pikosekunden und vorzugsweise kürzer bearbeitet wird. Die ionisierende Strahlung, beispielsweise Röntgenstrahlung mit einer Energie von 8 keV oder höher, Gammastrahlung, hochenergetische Neutronen, Elektronen, Positronen oder Protonen, durchdringt die Wandung der Messkammer und regt den Fluorophor in der Messkammer an, der daraufhin Fluoreszenzlicht emittiert. Die Lebensdauer der angeregten Zustände im Fluorophor beträgt ca. 0,5 ns, d.h., ungefähr 0,5 ns nachdem die ionisierende Strahlung den Fluorophor angeregt hat, wird Fluoreszenzlicht emittiert. Bei geringen Gasdrücken kann die Lebensdauer der angeregten Zustände auf bis zu 20 ns ansteigen.

Das emittierte Fluoreszenzlicht wird von dem Lichtdetektor in der Messkammer aufgefangen und in ein elektrisches Signal umgewandelt, das proportional zur Fluenz des erfassten Fluoreszenzlichts und damit auch proportional zur Dosis der ionisierenden Strahlung ist, die in die Kammer eingefallen ist. Aufgrund der kurzen Lebensdauer der angeregten Zustände im Fluorophor und der Geschwindigkeit des Lichtes in der Messkammer tritt anders als bei herkömmlichen Dosimetern, wie beispielsweise Ionisationskammern, keine wesentliche Verzögerung bei der Messung der Dosis auf. Auch tritt trotz der durch die kurze Pulsdauer bedingten hohen Dosisleistungen keine relevante Sättigung ein, die eine Messung der Strahlungsdosis erschweren könnte. Es handelt sich somit um ein aktiv messendes und damit kein integrierendes Dosimeter, mit dem auch bei sehr kurzen Strahlungspulsen die momentane Strahlungsdosis gemessen werden kann.

In einer bevorzugten Ausführungsform ist die Messkammer mit Luft, Argon, Stickstoff, Kohlenstoffdioxid oder Methan als Fluorophor gefüllt. In der bevorzugten Ausführungsform ist somit die Messkammer mit einem Gas wie beispielsweise Luft oder Argon befüllt. Insbesondere eine mit Luft befüllte Messkammer bietet deutliche Vorteile, da dies die Handhabung deutlich erleichtert.

Erfindungsgemäß weist der Lichtsensor eine Ansprechzeit von weniger als 10 ns und vorzugsweise von weniger als 5 ns auf, wobei der Lichtsensor vorzugsweise ein Photomultiplier oder ein Halbleiterdetektor ist. Unter Ansprechzeit kann beispielsweise die Zeit vom Einfall eines Photons in den Lichtdetektor bis zum Anliegen eines entsprechenden Signals an einem Signalausgang des Lichtsensor verstanden werden. In einer beispielhaften Ausführungsform liegt ein Signal an einem Signalausgang an, wenn beispielsweise 50 % oder 90 % des Signalpegels erreicht sind. Eine kurze Ansprechzeit ermöglicht eine genaue Messung der Strahlungsdosis trotz kurzer Strahlungspulse.

Die Messkammer ist vorzugsweise aus einem Metall, einem Kunststoff oder einem Kompositwerkstoff gebildet. Beispielsweise kann die Messkammer und, genauer gesagt, die Wandung der Messkammer aus einem kohlefaserverstärkten Kunststoff gebildet sein. Allerdings sind auch andere Materialien denkbar. Die Wandung der Messkammer kann auch in unterschiedlichen Bereichen aus unterschiedlichen Materialien gebildet sein. Beispielsweise kann die Messkammer verstärkte Bereiche aufweisen, die ionisierende Strahlung stärker absorbieren, und dünnere Bereiche, in denen ionisierende Strahlung weniger stark absorbiert wird. Solche Bereiche können beispielsweise ein Messfenster bilden, durch das ionisierende Strahlung (aber kein Licht) in die Messkammer einfällt und nur möglichst geringe Anteile der Strahlung absorbiert werden.

In einer bevorzugten Ausführungsform weist die Messkammer eine zylindrische Form auf. Allerdings sind auch andere Ausgestaltungen denkbar. Beispielsweise kann die Messkammer sphärisch oder kubisch geformt sein.

Es ist weiterhin bevorzugt, wenn in der Messkammer eine Lichtquelle zur Kalibrierung des Lichtsensors angeordnet ist. Hierzu wird beispielsweise eine Lichtquelle verwendet, die Licht mit einer bekannten Fluenz und vorzugsweise im gleichen Wellenlängenbereich emittiert, in dem auch das von der ionisierenden Strahlung erzeugte Fluoreszenzlicht beobachtet wird. Mittels der Lichtquelle kann der Lichtsensor kalibriert werden, da bei eingeschalteter Lichtquelle bekannt ist, wie hoch die Fluenz der einfallenden Photonen auf dem Lichtsensor ist und somit das Verhältnis zwischen der Fluenz der auf den Lichtsensor einfallenden Photonen und dem Ausgangssignal des Lichtsensors bestimmt bzw. eingestellt werden kann.

In einer bevorzugten Ausführungsform umfasst der Lichtsensor zumindest einen optischen Abschwächer, der so in der Messkammer angeordnet werden kann, dass durch den optischen Abschwächer die Fluenz des auf den Lichtsensor einfallenden Fluoreszenzlichts reduziert wird. Auf diese Weise kann eine Sättigung des Lichtsensors verhindert und der Messbereich des Dosimeters an hohe Strahlungsdosen angepasst werden.

In einer bevorzugen Ausführungsform ist die Messkammer so konfiguriert, dass ein Volumen der Messkammer verändert werden kann, um eine Empfindlichkeit des Dosimeters zu verändern. In dieser bevorzugten Ausführungsform ist die Messkammer mit einem Gas oder einem Fluid gefüllt. Beispielsweise kann das Volumen der Messkammer verändert werden, indem eine Messkammer mit flexiblen oder dehnbaren Wandungen verwendet wird oder es kann beispielsweise ein bewegliches Wandungselement in einer Kammer verschoben werden, um das Volumen der eigentlichen Messkammer anzupassen. Indem das Volumen der Messkammer verändert wird, wird auch die Menge Fluorophors verändert, mit dem die ionisierende Strahlung wechselwirken kann und damit die Fluenz des durch die Strahlung erzeugten Fluoreszenzlichts. So kann beispielsweise ein größeres Volumen verwendet werden, um geringe Strahlungsdosen genauer zu messen, und ein kleineres Volumen, um hohe Strahlungsdosen zu messen, bei denen andernfalls der Lichtsensor aufgrund der Menge an erzeugtem Fluoreszenzlicht in die Sättigung gehen würde.

Alternativ oder zusätzlich kann das Dosimeter so ausgebildet sein, dass ein Druck des Fluorophors in der Messkammer verändert werden kann, um die Empfindlichkeit des Dosimeters zu verändern. Hierzu wird vorzugsweise ein Fluorophor in Form eines Gases oder eines anderen kompressiblen Fluids verwendet.

In einer bevorzugten Ausführungsform ist in der Messkammer neben dem Fluorophor ein Szintillator angeordnet, und der Lichtsensor ist dazu konfiguriert, von ionisierender Strahlung in dem Szintillator erzeugtes Szintillationslicht zu erfassen und ein Signal zu erzeugen, das proportional zur Fluenz des erfassten Szintillationslichts ist. Die Verwendung von Szintillatoren zur Messung von Strahlungsdosen ist dem Fachmann hinlänglich bekannt. Durch die Anordnung eines Szintillators in der Messkammer kann das Dosimeter auf vorteilhafte Weise auch zur Messung der Strahlungsdosis einer ionisierenden Strahlung verwendet werden, bei der nicht ausreichend viel Fluoreszenzlicht für eine Dosismessung erzeugt wird.

Vorzugsweise umfasst das Dosimeter eine Blende, die zwischen dem Szintillator und dem Lichtsensor angeordnet werden kann, so dass kein von ionisierender Strahlung in dem Szintillator erzeugtes Szintillationslicht von dem Lichtsensor erfasst wird. Mit anderen Worten kann die Blende so zwischen dem Szintillator und dem Lichtsensor platziert werden, dass kein Licht von dem Szintillator in den Lichtsensor fällt. So kann sichergestellt werden, dass ausschließlich durch Fluoreszenzvorgänge erzeugtes Licht von dem Lichtsensor gemessen werden kann. Soll auch in dem Szintillator erzeugtes Licht mit dem Lichtsensor erfasst werden, wird die Blende entfernt.

In einer alternativen, bevorzugten Ausführungsform ist die Messkammer vollständig mit dem Fluorophor verfüllt und es ist kein Szintillator in der Messkammer angeordnet.

In einem zweiten Aspekt wird ein Dosimeter nach einem der vorgehenden Ansprüche zur Messung einer Strahlungsdosis einer ionisierenden Strahlung verwendet. Die Vorteile der Verwendung eines erfindungsgemäßen Dosimeters entsprechen den Vorteilen des entsprechenden Dosimeters.

Dabei ist es bevorzugt, wenn das Dosimeter zur Messung der Strahlungsdosis einer gepulsten ionisierenden Strahlung mit Strahlungspulsen mit einer Länge von weniger als 10 ns, vorzugsweise von weniger als 5 ns und noch bevorzugter mit einer Länge von weniger als 1 ns verwendet wird.

In einer bevorzugten Ausführungsform wird das Dosimeter zur Messung der Strahlungsdosis von Gammastrahlung mit einer Energie von mehr als 8 keV, vorzugsweise mehr als 10 keV verwendet.

In einem dritten Aspekt wird das der Erfindung zugrundeliegende Problem durch ein Spektrometer zur Bestimmung einer energieabhängigen Strahlungsdosis für ionisierende Strahlung mit einem Ausgangsenergiespektrum mit einer Mehrzahl von Dosimetern gemäß einer der vorhergehenden Ausführungsformen gelöst, wobei eine Wandung der Messkammer jedes Dosimeters der Mehrzahl von Dosimetern andere Absorptionseigenschaften aufweist als eine Wandung zumindest eines anderen Dosimeters der Mehrzahl von Dosimetern, so dass die ionisierende Strahlung, die in der Messkammer des jeweiligen Dosimeters Fluoreszenzlicht erzeugt, ein Energiespektrum aufweist, dass sich sowohl vom Ausgangsenergiespektrum als auch vom Energiespektrum der ionisierenden Strahlung unterscheidet, die in der Messkammer des zumindest einen Dosimeters mit einer Wandung mit abweichenden Absorptionseigenschaften Fluoreszenzlicht erzeugt.

Mit anderen Worten werden in der bevorzugten Ausführungsform mehrere Dosimeter entsprechend zumindest einer der zuvor beschriebenen Ausführungsformen kombiniert, um eine Energieabhängigkeit der Strahlungsdosis zu bestimmen. Hierzu werden Dosimeter verwendet, bei denen durch Wandungen mit unterschiedlichen Absorptionseigenschaften in zumindest zwei der verwendeten Dosimeter Strahlungsdosen für Strahlungen mit unterschiedlichen Energiespektren gemessen werden, so dass aus dem Unterschied zwischen den Strahlungsdosen ein Rückschluss auf die Energieabhängigkeit der Strahlung gezogen werden kann. Unterschiedliche Absorptionseigenschaften können beispielsweise durch unterschiedlich dicke Wandungen oder Wandungen aus unterschiedlichen Materialien erreicht werden.

In einer bevorzugten Ausführungsform weist die Wandung der Messkammer jedes Dosimeters der Mehrzahl von Dosimetern Absorptionseigenschaften auf, die von den Absorptionseigenschaften der Wandung der Messkammer jedes anderen Dosimeters der Mehrzahl von Dosimetern abweichen. Mit anderen Worten wird bei identischem Ausgangsspektrum mit jedem der Dosimeter eine Strahlungsdosis für ein anderes Energiespektrum gemessen.

In einer bevorzugten Ausführungsform sind die Wandungen der Messkammern der Mehrzahl von Dosimetern aus identischen Materialien gebildet und abweichende Absorptionseigenschaften werden durch abweichende Abmessungen der Wandungen erzeugt. Alternativ oder ergänzend sind die Wandungen der Messkammern der Mehrzahl von Dosimetern aus unterschiedlichen Materialien gebildet und weisen daher abweichende Absorptionseigenschaften auf.

Die Vorteile der verschiedenen Ausführungsformen eines Spektrometers entsprechen im Übrigen den Vorteilen der Dosimeter, die für das Spektrometer verwendet werden.

Nachfolgend werden bezugnehmend auf die Zeichnung mehrere Ausführungsbeispiele eines Dosimeters und eines Spektrometers beschrieben. Dabei zeigt
- Figur 1: ein erstes Ausführungsbeispiel eines Dosimeters,
- Figur 2: ein zweites Ausführungsbeispiel eines Dosimeters,
- Figur 3: ein drittes Ausführungsbeispiel eines Dosimeters,
- Figur 4: ein viertes Ausführungsbeispiel eines Dosimeters und
- Figur 5: ein Ausführungsbeispiel eines Spektrometers.

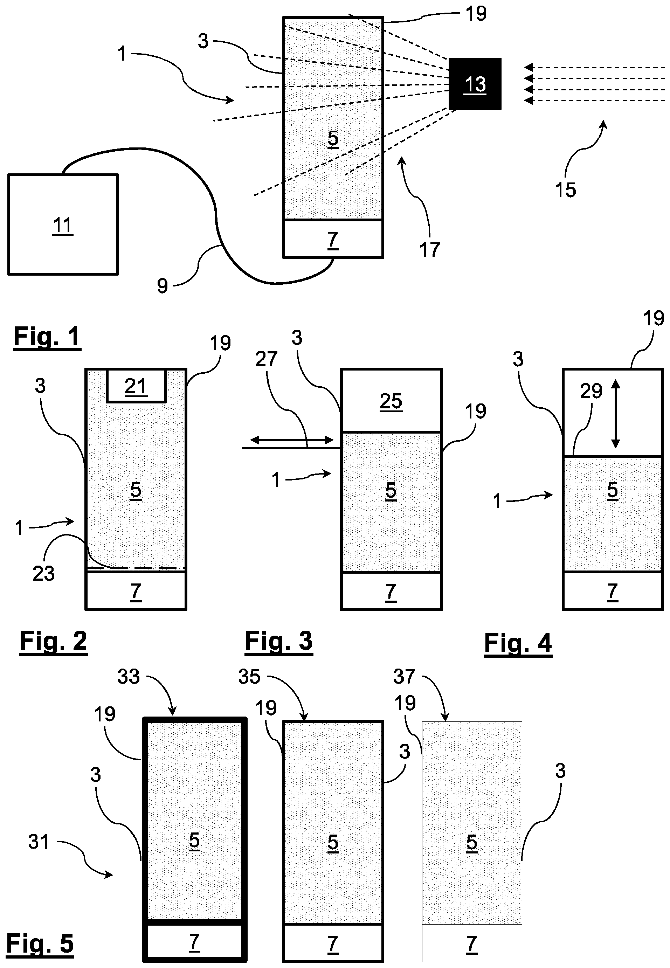

In den Figuren 1 bis 5 sind - sofern nicht anders angegeben - gleich bezeichnete Elemente mit den gleichen Bezugszeichen versehen.

Figur 1 zeigt ein erstes Ausführungsbeispiel eines Dosimeters 1 mit einer Messkammer 3, die mit einem Fluorophor 5 gefüllt ist und in der ein Lichtsensor 7 angeordnet ist. In dem Ausführungsbeispiel in Figur 1 ist der Fluorophor ein Gas, vorzugsweise Luft, das die Messkammer 3 vollständig ausfüllt. Die Messkammer 3 ist aus einem lichtdichten Kunststoff gebildet, so dass kein Licht aus der Umgebung in die Messkammer 3 einfällt.

Als Lichtsensor 7 wird ein Photomultiplier mit einer Ansprechzeit von weniger als 5 ns verwendet. Der Lichtsensor 7 ist über einen Signalausgang 9 mit einer Auswerteeinheit 11 verbunden, bei der es sich beispielsweise um eine Datenverarbeitungseinrichtung handelt.

Das Dosimeter 1 wird verwendet, um die Strahlungsdosis einer gepulsten ionisierenden Strahlung mit sehr kurzen Strahlungspulsen zu messen. Die Dauer der Strahlungspulse beträgt beispielsweise weniger als 1 ns. In Figur 1 ist schematisch ein Werkstück 13 dargestellt, das mit einem Ultrakurzpulslaser 15 bearbeitet wird. Der Ultrakurspulslaser 15 ist in Figur 1 durch gestrichelte Linien mit Pfeilspitzen dargestellt und weist eine Pulslänge im Bereich von wenigen Femtosekunden auf. Beim Auftreffen des Laserstrahls auf das Werkstück 13 entsteht ionisierende Strahlung 17 in Form von Röntgenstrahlung 17, die in Figur 1 durch gestrichelte Linien dargestellt ist. Die Röntgenstrahlung 17 ist ebenfalls gepulst mit einer ähnlichen Pulslänge wie der Laser 15. Ein Teil der Röntgenstrahlung 17 durchdringt die Wandung 19 der Messkammer 3 und erzeugt durch Anregung des Fluorophors 5 Fluoreszenzlicht. Das Fluoreszenzlicht wird von dem hierzu konfigurierten Lichtsensor 7 aufgefangen, der über den Signalausgang 9 ein Signal an die Auswerteeinheit 11 ausgibt, das proportional zu dem erfassten Fluoreszenzlicht und damit auch proportional zu der Strahlungsdosis der einfallenden ionisierenden Strahlung 17 ist.

Aufgrund der kurzen Lebensdauer der Anregungszustände im Fluorophor 5 von ungefähr 0,5 ns und der kurzen Ansprechzeit des Lichtsensors 7, die in der gleichen zeitlichen Größenordnung ist, kann mit dem Sensor auch bei - verhältnismäßig - hohen Strahlungsdosen über sehr kurze Zeiträume die Strahlungsdosis gemessen werden, ohne dass es unmittelbar zu Sättigungseffekten kommt.

In Figur 2 ist eine alternative Ausführungsform eines Dosimeters 1 dargestellt, das auf dem Dosimeter 1 aus Figur 1 aufbaut. Auf die Darstellung eines Signalausgangs, einer Auswerteeinheit sowie einer Strahlungsquelle wurde verzichtet. Das Dosimeter 1 aus Figur 2 kann aber entsprechend dem Dosimeter 1 aus Figur 1 über einen Signalausgang mit einer Auswerteinheit verbunden werden. Nachfolgend wird das in Figur 2 dargestellte Dosimeter 1 nur insoweit näher erläutert, wie es sich von dem in Figur 1 dargestellten Dosimeter unterscheidet.

Das Dosimeter 1 in Figur 2 weist zusätzlich zu dem Dosimeter 1 aus Figur 1 eine Lichtquelle 21 auf, die in der Messkammer angeordnet ist und dazu verwendet werden kann, um den Lichtsensor 7 zu kalibrieren. Weiterhin ist in Figur 2 ein optischer Abschwächer 23 gezeigt, der zwischen dem Lichtsensor 7 und dem Fluorophor angeordnet werden kann, um die Fluenz des erzeugten Fluoreszenzlichts zu verringern, so dass auch höhere Strahlungsdosen gemessen werden können, ohne dass es zu einer Sättigung des Lichtsensors 7 kommt. Der optische Abschwächer 23 ist in dem Ausführungsbeispiel 23 so ausgeführt, dass er wahlweise vor dem Lichtsensor 7 angeordnet oder wieder entfernt werden kann. Der optische Abschwächer 23 und die Lichtquelle 21 sind unabhängig voneinander und können auch jeweils ohne die andere Komponente verwendet werden.

In Figur 3 ist eine alternative Ausführungsform eines Dosimeters 1 dargestellt, das auf dem Dosimeter 1 aus Figur 1 aufbaut. Auf die Darstellung eines Signalausgangs, einer Auswerteeinheit sowie einer Strahlungsquelle wurde verzichtet. Das Dosimeter 1 aus Figur 3 kann aber entsprechend dem Dosimeter 1 aus Figur 1 über einen Signalausgang mit einer Auswerteinheit verbunden werden. Nachfolgend wird das in Figur 3 dargestellte Dosimeter 1 nur insoweit näher erläutert, wie es sich von dem in Figur 1 dargestellten Dosimeter unterscheidet.

Das Dosimeter 1 in Figur 3 umfasst zusätzlich zu dem Dosimeter 1 aus Figur 1 einen Szintillator 25, der in der Messkammer angeordnet ist und dazu verwendet werden kann, Strahlungsdosen von kontinuierlichen Strahlungsquellen bzw. gepulsten Strahlungsquellen mit deutlich längeren Strahlungspulsen zu messen. Das von der ionisierenden Strahlung in dem Szintillator 25 erzeugte Szintillationslicht wird ebenfalls von dem hierzu konfigurierten Lichtsensor 7 empfangen, der an seinem Signalausgang (in Figur 3 nicht dargestellt) ein Signal ausgibt, das proportional zu dem erzeugten Szintillationslicht und damit auch proportional zur Strahlungsdosis ist. Die Verwendung von Szintillatoren 25 zur Dosismessung ist dem Fachmann hinreichend bekannt, so dass von einer ausführlicheren Darstellung hier abgesehen wird. Um zu verhindern, dass bei gepulsten Strahlungsquellen Szintillationslicht die Messergebnisse verfälscht, ist eine Blende 27 vorgesehen, die wahlweise zwischen den Szintillator 25 und den Fluorophor 5 bewegt werden kann. Die Blende 27 verhindert, dass Szintillationslicht auf den Lichtsensor 7 fällt bzw. von diesem erfasst wird.

In Figur 4 ist eine alternative Ausführungsform eines Dosimeters 1 dargestellt, das auf dem Dosimeter 1 aus Figur 1 aufbaut. Auf die Darstellung eines Signalausgangs, einer Auswerteeinheit sowie einer Strahlungsquelle wurde verzichtet. Das Dosimeter 1 aus Figur 4 kann aber entsprechend dem Dosimeter 1 aus Figur 1 über einen Signalausgang mit einer Auswerteinheit verbunden werden. Nachfolgend wird das in Figur 4 dargestellte Dosimeter 1 nur insoweit näher erläutert, wie es sich von dem in Figur 1 dargestellten Dosimeter unterscheidet.

In dem in Figur 4 dargestellten Ausführungsbeispiel ist in der Messkammer 3 eine verschiebbare Wandung 29 vorgesehen, über die das Volumen der Messkammer 3, in der der gasförmige Fluorophor angeordnet ist, verändert werden kann. Durch die Veränderung des Volumens kann die Menge von Fluoreszenzlicht verändert werden, die bei gleicher Strahlungsdosis erzeugt wird, und somit die Sensitivität bzw. Empfindlichkeit des Dosimeters an unterschiedliche Strahlungsquellen angepasst werden.

Die Ausführungsformen der Figuren 1 bis 4 können miteinander kombiniert werden, sofern dies nicht ausdrücklich ausgeschlossen ist. Lediglich der Vollständigkeit halber sei darauf hingewiesen, dass die dargestellten Geometrien und Anordnungen der Komponenten der Dosimeter 1 rein schematisch sind und kein Hindernis für die Kombination der Ausführungsformen darstellen.

Schließlich ist in Figur 5 ein Ausführungsbeispiel eines Spektrometers 31 dargestellt, das drei Dosimeter 33, 35, 37 umfasst, die jeweils wie das Dosimeter 1 aus Figur 1 aufgebaut sind. Die Dosimeter 33, 35, 37 könnten jedoch auch wie eines der Dosimeter 1 aus den Figuren 2, 3, 4 aufgebaut sein. Die Dosimeter 33, 35, 37 unterscheiden sich durch unterschiedliche dicke Wandungen 19 voneinander, wie durch unterschiedlich dicke Linien angedeutet wird, die die Wandungen 19 darstellen. Die Darstellung der Wandungen 19 ist rein schematisch, d.h., aus der Stärke der Linien kann nicht auf die tatsächliche Dicke der Wandungen 19 geschlossen werden.

Die unterschiedlich starken Wandungen 19 weisen unterschiedliche Absorptionseigenschaften auf. Insbesondere werden durch dickere Wandungen 19 ionisierende Strahlungen mit niedrigen Energien im Verhältnis stärker absorbiert als ionisierende Strahlung mit höheren Energien. Dies führt dazu, dass in jedem Dosimeter 33, 35, 37 trotz identischem Ausgangsenergiespektrum in der jeweiligen Messkammer 3 Strahlung mit einem anderen Energiespektrum mit dem Fluorophor 5 wechselwirkt. Damit kann aus einem Vergleich der für die verschiedenen Energiespektren gemessenen Strahlungsdosen eine Energieabhängigkeit der Strahlungsdosis der ionisierenden Strahlung bestimmt werden.

### Bezugszeichenliste

- 1: Dosimeter
- 3: Messkammer
- 5: Fluorophor
- 7: Lichtsensor
- 9: Signalausgang
- 11: Auswerteeinheit
- 13: Werkstück
- 15: Ultrakurzpulslaser
- 17: Röntgenstrahlung
- 19: Wandung
- 21: Lichtquelle
- 23: optischer Abschwächer
- 25: Szintillator
- 27: Blende
- 29: bewegliche Wandung
- 31: Spektrometer
- 33: Dosimeter
- 35: Dosimeter
- 37: Dosimeter

## Patentansprüche

1. Dosimeter (1) zur Messung einer Strahlungsdosis von ionisierender Strahlung (17) mit einer Messkammer (3) und einem Lichtsensor (7), wobei die Messkammer (3) mit einem Fluorophor (5) gefüllt und lichtdicht ist, so dass kein Licht aus der Umgebung in die Messkammer (3) einfallen kann, und wobei der Lichtsensor (7) dazu konfiguriert ist, von ionisierender Strahlung (17) in dem Fluorophor (5) in der Messkammer (3) erzeugtes Fluoreszenzlicht zu erfassen und ein Signal zu erzeugen, das proportional zur Fluenz des erfassten Fluoreszenzlichts ist,
**dadurch gekennzeichnet, dass** der Lichtsensor (7) eine Ansprechzeit von weniger als 10 ns aufweist.

2. Dosimeter (1) nach Anspruch 1, wobei der Fluorophor (5) ein Gas, vorzugsweise Luft, Argon oder Stickstoff ist.

3. Dosimeter (1) nach Anspruch 1 oder 2, wobei der Lichtsensor (7) eine Ansprechzeit von weniger als 5 ns aufweist, und/oder wobei der Lichtsensor (7) vorzugsweise ein Photomultiplier oder ein Halbleiterdetektor ist.

4. Dosimeter (1) nach Anspruch 1, 2 oder 3, wobei die Messkammer (3) aus einem Metall oder einem Kunststoff gebildet ist, wobei der Kunststoff vorzugsweise ein kohlefaserverstärkter Kunststoff ist.

5. Dosimeter (1) nach einem der vorhergehenden Ansprüche, wobei in der Messkammer (3) eine Lichtquelle (21) zur Kalibrierung des Lichtsensors (7) angeordnet ist.

6. Dosimeter (1) nach einem der vorhergehenden Ansprüche, wobei der Lichtsensor (7) zumindest einen optischen Abschwächer (23) umfasst, der so in der Messkammer (3) angeordnet werden kann, dass durch den optischen Abschwächer (23) die Fluenz des auf den Lichtsensor (7) einfallenden Fluoreszenzlichts reduziert wird.

7. Dosimeter (1) nach einem der vorhergehenden Ansprüche, wobei die Messkammer (3) so konfiguriert ist, dass ein Volumen der Messkammer (3) verändert werden kann, um eine Empfindlichkeit des Dosimeters (1) zu verändern.

8. Dosimeter (1) nach einem der vorhergehenden Ansprüche, wobei der Fluorophor (5) ein Gas ist und wobei das Dosimeter (1) so ausgebildet ist, dass ein Druck des Gases in der Messkammer (3) verändert werden kann, um die Empfindlichkeit des Dosimeters (1) zu verändern.

9. Dosimeter (1) nach einem der vorhergehenden Ansprüche, wobei in der Messkammer (3) neben dem Fluorophor (5) ein Szintillator (25) angeordnet ist und wobei der Lichtsensor (7) dazu konfiguriert ist, von ionisierender Strahlung in dem Szintillator (25) erzeugtes Szintillationslicht zu erfassen und ein Signal zu erzeugen, das proportional zur Fluenz des erfassten Szintillationslichts ist.

10. Dosimeter (1) nach Anspruch 9, wobei das Dosimeter (1) eine Blende (27) umfasst, die zwischen dem Szintillator (25) und dem Lichtsensor (7) angeordnet werden kann, so dass kein von ionisierender Strahlung in dem Szintillator (25) erzeugtes Szintillationslicht von dem Lichtsensor (7) erfasst wird.

11. Verwendung eines Dosimeters (1) nach einem der vorgehenden Ansprüche zur Messung einer Strahlungsdosis einer ionisierenden Strahlung (13),
wobei das Dosimeter (1) vorzugsweise zur Messung der Strahlungsdosis einer gepulsten ionisierenden Strahlung (13) mit Strahlungspulsen mit einer Länge von weniger als 10 ns, vorzugsweise von weniger als 5 ns und noch bevorzugter mit einer Länge von weniger als 1 ns verwendet wird, und/oder
wobei die ionisierende Strahlung vorzugsweise Gammastrahlung mit einer Energie von mehr als 8 keV, noch bevorzugter von mehr als 10 keV ist.

12. Spektrometer (31) zur Bestimmung einer energieabhängigen Strahlungsdosis für ionisierende Strahlung (17) mit einem Ausgangsenergiespektrum mit einer Mehrzahl von Dosimetern (33, 35, 37) nach einem der Ansprüche 1 bis 9, wobei eine Wandung (19) der Messkammer (3) jedes Dosimeters (33, 35, 37) der Mehrzahl von Dosimetern (33, 35, 37) andere Absorptionseigenschaften aufweist als eine Wandung (19) zumindest eines anderen Dosimeters (33, 35, 37) der Mehrzahl von Dosimetern (33, 35, 37), so dass die ionisierende Strahlung, die in der Messkammer (3) des jeweiligen Dosimeters (33, 35, 37) Fluoreszenzlicht erzeugt, ein Energiespektrum aufweist, das sich sowohl vom Ausgangsenergiespektrum als auch vom Energiespektrum der ionisierenden Strahlung unterscheidet, die in der Messkammer (3) des zumindest einen Dosimeters (33, 35, 37) mit einer Wandung (19) mit abweichenden Absorptionseigenschaften Fluoreszenzlicht erzeugt.

13. Spektrometer (31) nach Anspruch 12, wobei die Wandung (19) der Messkammer (3) jedes Dosimeters (33, 35, 37) der Mehrzahl von Dosimetern (33, 35, 37) Absorptionseigenschaften aufweist, die von den Absorptionseigenschaften der Wandung (19) der Messkammer (3) jedes anderen Dosimeters (33, 35, 37) der Mehrzahl von Dosimetern (33, 35, 37) abweichen.

14. Spektrometer (31) nach Anspruch 12 oder 13, wobei die Wandungen (19) der Messkammern (3) der Mehrzahl von Dosimetern (33, 35, 37) aus identischen Materialien gebildet sind und abweichende Absorptionseigenschaften durch abweichende Abmessungen der Wandungen (19) erzeugt werden.

15. Spektrometer (31) nach Anspruch 12, 13 oder 14, wobei die Wandungen (19) der Messkammern (3) der Mehrzahl von Dosimetern (33, 35, 37) aus unterschiedlichen Materialien gebildet sind und abweichende Absorptionseigenschaften aufweisen.

## Claims

1. A dosimeter (1) for measuring a radiation dose of ionizing radiation (17) with a measuring chamber (3) and a light sensor (7), wherein the measuring chamber (3) is filled with a fluorophore (5) and is light-tight such that no light from the environment can enter the measuring chamber, and wherein the light sensor (7) is configured to detect fluorescent light generated in the fluorophore (5) in the measuring chamber (3) by ionizing radiation (17) and to generate a signal that is proportional to the fluence of the detected fluorescent light, **characterized in that** the light sensor (7) has a response time of less than 10 ns.

2. The dosimeter (1) according to claim 1, wherein the fluorophore (5) is a gas, preferably air, argon, or nitrogen.

3. The dosimeter (1) according to claim 1 or 2, wherein the light sensor (7) has a response time of less than 5 ns, and/or wherein the light sensor (7) is preferably a photomultiplier or a semiconductor detector.

4. The dosimeter (1) according to claim 1, 2, or 3, wherein the measuring chamber (3) is formed from a metal or a plastic, wherein the plastic is preferably a carbon fiber-reinforced plastic.

5. The dosimeter (1) according to one of the preceding claims, wherein a light source (21) for calibrating the light sensor (7) is arranged in the measuring chamber (3).

6. The dosimeter (1) according to one of the preceding claims, wherein the light sensor (7) comprises at least one optical attenuator (23), which can be arranged in the measuring chamber (3) such that the fluence of the fluorescent light falling on the light sensor (7) is reduced by the optical attenuator (23).

7. The dosimeter (1) according to one of the preceding claims, wherein the measuring chamber (3) is configured such that a volume of the measuring chamber (3) can be changed in order to change the sensitivity of the dosimeter (1).

8. The dosimeter (1) according to one of the preceding claims, wherein the fluorophore (5) is a gas, and wherein the dosimeter (1) is designed such that a pressure of the gas in the measuring chamber (3) can be changed in order to change the sensitivity of the dosimeter (1).

9. The dosimeter (1) according to one of the preceding claims, wherein a scintillator (25) is arranged in the measuring chamber (3) in addition to the fluorophore (5), and wherein the light sensor (7) is configured to detect scintillation light generated in the scintillator (25) by ionizing radiation and to generate a signal that is proportional to the fluence of the detected scintillation light.

10. The dosimeter (1) according to claim 9, wherein the dosimeter (1) comprises a shutter (27), which can be arranged between the scintillator (25) and the light sensor (7) such that no scintillation light generated in the scintillator (25) by ionizing radiation is detected by the light sensor (7).

11. Use of a dosimeter (1) according to one of the preceding claims to measure a radiation dose of an ionizing radiation (13),
wherein the dosimeter (1) is preferably used to measure the radiation dose of a pulsed ionizing radiation (13) with radiation pulses with a length of less than 10 ns, preferably less than 5 ns and even more preferably with a length of less than 1 ns, and/or
wherein the ionizing radiation is preferably gamma radiation with an energy of more than 8 keV, even more preferably more than 10 keV.

12. A spectrometer (31) for determining an energy-dependent radiation dose for ionizing radiation (17) with an output energy spectrum with a plurality of dosimeters (33, 35, 37) according to one of claims 1 to 9, wherein a wall (19) of the measuring chamber (3) of each dosimeter (33, 35, 37) of the plurality of dosimeters (33, 35, 37) has different absorption characteristics than a wall (19) of at least one other dosimeter (33, 35, 37) of the plurality of dosimeters (33, 35, 37), such that the ionizing radiation that generates fluorescent light in the measuring chamber (3) of each dosimeter (33, 35, 37) has an energy spectrum that differs both from the output energy spectrum and from the energy spectrum of the ionizing radiation that generates fluorescent light in the measuring chamber (3) of the at least one dosimeter (33, 35, 37) having a wall (19) with differing absorption characteristics.

13. The spectrometer (31) according to claim 12, wherein the wall (19) of the measuring chamber (3) of each dosimeter (33, 35, 37) of the plurality of dosimeters (33, 35, 37) has absorption characteristics that differ from the absorption characteristics of the wall (19) of the measuring chamber (3) of each of the other dosimeters (33, 35, 37) of the plurality of dosimeters (33, 35, 37).

14. The spectrometer (31) according to claim 12 or 13, wherein the walls (19) of the measuring chambers (3) of the plurality of dosimeters (33, 35, 37) are formed from identical materials, and differing absorption characteristics are generated through differing dimensions of the walls (19).

15. The spectrometer (31) according to claim 12, 13, or 14, wherein the walls (19) of the measuring chambers (3) of the plurality of dosimeters (33, 35, 37) are formed from different materials and have differing absorption characteristics.

## Revendications

1. Dosimètre (1) destiné à la mesure d'une dose de rayonnement d'un rayonnement ionisant (17) avec une chambre de mesure (3) et un capteur de lumière (7), dans lequel la chambre de mesure (3) est remplie d'un fluorophore (5) et opaque, de sorte qu'aucune lumière de l'environnement ne peut entrer dans la chambre de mesure (3), et dans lequel le capteur de lumière (7) est configuré pour détecter de la lumière fluorescente produite par le rayonnement ionisant (17) dans le fluorophore (5) dans la chambre de mesure (3) et pour produire un signal proportionnel à la fluence de la lumière fluorescente détectée,
**caractérisé en ce que** le capteur de lumière (7) présente un temps de réaction inférieur à 10 ns.

2. Dosimètre (1) selon la revendication 1, dans lequel le fluorophore (5) est un gaz, de préférence de l'air, de l'argon ou de l'azote.

3. Dosimètre (1) selon la revendication 1 ou 2, dans lequel le capteur de lumière (7) présente un temps de réaction inférieur à 5 ns, et/ou dans lequel le capteur de lumière (7) est de préférence un photomultiplicateur ou un détecteur semiconducteur.

4. Dosimètre (1) selon la revendication 1, 2 ou 3, dans lequel la chambre de mesure (3) est constituée d'un métal ou d'une matière plastique, dans lequel la matière plastique est de préférence une matière plastique renforcée avec des fibres de carbone.

5. Dosimètre (1) selon l'une des revendications précédentes, dans lequel une source de lumière (21) destinée à l'étalonnage du capteur de lumière (7) est disposée dans la chambre de mesure (3).

6. Dosimètre (1) selon l'une des revendications précédentes, dans lequel le capteur de lumière (7) comporte au moins un atténuateur optique (23), lequel peut être disposé de telle façon dans la chambre de mesure (3) que la fluence de la lumière fluorescente incidente sur le capteur de lumière (7) est réduite par l'atténuateur optique (23).

7. Dosimètre (1) selon l'une des revendications précédentes, dans lequel la chambre de mesure (3) est configurée de telle façon qu'un volume de la chambre de mesure (3) peut être modifié pour modifier la sensibilité du dosimètre (1).

8. Dosimètre (1) selon l'une des revendications précédentes, dans lequel le fluorophore (5) est un gaz et dans lequel le dosimètre (1) est conçu de telle façon qu'une pression du gaz dans la chambre de mesure (3) peut être modifiée pour modifier la sensibilité du dosimètre (1).

9. Dosimètre (1) selon l'une des revendications précédentes, dans lequel un scintillateur (25) est disposé à côté du fluorophore (5) dans la chambre de mesure (3) et dans lequel le capteur de lumière (7) est configuré pour détecter une lumière de scintillation produite dans le scintillateur (25) par le rayonnement ionisant et pour produire un signal proportionnel à la fluence de la lumière de scintillation détectée.

10. Dosimètre (1) selon la revendication 9, dans lequel le dosimètre (1) comporte un écran (27) apte à être disposé entre le scintillateur (25) et le capteur de lumière (7), de telle façon qu'aucune lumière de scintillation produite par le rayonnement ionisant dans le scintillateur (25) n'est détectée par le capteur de lumière (7).

11. Utilisation d'un dosimètre (1) selon l'une des revendications précédentes pour la mesure d'une dose de rayonnement d'un rayonnement ionisant (13),
dans laquelle le dosimètre (1) est utilisé de préférence pour la mesure d'une dose de rayonnement d'un rayonnement ionisant pulsé (13) avec des impulsions de rayonnement d'une longueur inférieure à 10 ns, de préférence inférieure à 5 ns et encore plus préférentiellement d'une longueur inférieure à 1 ns, et/ou
dans laquelle le rayonnement ionisant est de préférence un rayonnement gamma avec une énergie supérieure à 8 keV, encore plus préférentiellement supérieure à 10 keV.

12. Spectromètre (31) destiné à la détermination d'une dose de rayonnement dépendante de l'énergie pour un rayonnement ionisant (17) avec un spectre d'énergie initial avec une pluralité de dosimètres (33, 35, 37) selon l'une des revendications 1 à 9, dans lequel une paroi (19) de la chambre de mesure (3) de chaque dosimètre (33, 35, 37) parmi la pluralité de dosimètres (33, 35, 37) présente d'autres propriétés d'absorption qu'une paroi (19) d'au moins un autre dosimètre (33, 35, 37) parmi la pluralité de dosimètres (33, 35, 37), de sorte que le rayonnement ionisant produisant une lumière fluorescente dans la chambre de mesure (3) du dosimètre (33, 35, 37) respectif présente un spectre d'énergie se différenciant aussi bien du spectre d'énergie initial que du spectre d'énergie du rayonnement ionisant produisant de la lumière fluorescente dans la chambre de mesure (3) de l'au moins un dosimètre (33, 35, 37) doté d'une paroi (19) avec des propriétés d'absorption différentes.

13. Spectromètre (31) selon la revendication 12, dans lequel la paroi (19) de la chambre de mesure (3) de chaque dosimètre (33, 35, 37) parmi la pluralité de dosimètres (33, 35, 37) présente des propriétés d'absorption différentes des propriétés d'absorption de la paroi (19) de la chambre de mesure (3) de chaque autre dosimètre (33, 35, 37) parmi la pluralité de dosimètres (33, 35, 37).

14. Spectromètre (31) selon la revendication 12 ou 13, dans lequel les parois (19) des chambres de mesure (3) de la pluralité de dosimètres (33, 35, 37) sont constituées de matériaux identiques et des propriétés d'absorption différentes sont produites grâce à des dimensions différentes des parois (19).

15. Spectromètre (31) selon la revendication 12, 13 ou 14, dans lequel les parois (19) des chambres de mesure (3) de la pluralité de dosimètres (33, 35, 37) sont constituées de matériaux divers et présentent des propriétés d'absorption différentes.
